# EUROPÄISCHE PATENTSCHRIFT

(11) **EP 0 872 168 B1**
(45) Veröffentlichungstag und Bekanntmachung des Hinweises auf die Patenterteilung: **30.10.2002**
(21) Anmeldenummer: 98106685.5
(22) Anmeldetag: 11.04.1998
(51) Int. Cl.: A01C 5/06, A01B 15/16

(54) **Drillmaschine mit Scheibensäschar und Abstreifer**
Seed drilling machine with seeding disk coulter and scraper
Semoir avec soc à disque et grattoir

(30) Priorität: 16.04.1997 DE 19715743
(43) Veröffentlichungstag der Anmeldung: 21.10.1998
(73) Patentinhaber: Lemken GmbH & Co. KG, 46519 Alpen (DE)
(72) Erfinder: Siebers, Josef, 46509 Xanten (DE)
(74) Vertreter: Schulte, Jörg, Dipl.-Ing.

(56) Entgegenhaltungen:
- EP-A- 0 056 988
- EP-A- 0 383 561
- FR-A- 2 689 722
- US-A- 4 330 041
- US-A- 5 222 828

## Beschreibung

Die Erfindung betrifft eine Drillmaschine bzw. eine Säschiene mit Scheibensäscharen, denen Abstreifer zugeordnet sind.

Aus der US-PS 5 318 133 sind z. B. Doppelscheibensäschare mit geteiltem Abstreifer bekannt, die die innenliegenden Scheibenflächen reinigen, die aber regelmäßig nachgestellt werden müssen. Schon nach geringem Verschleiss der Abstreifer baut sich ein dünner Film von anhaftender Erde auf, die nach Abschluss der Arbeiten austrocknet und hart wird. Beim nächsten Einsatz der Drillmaschine drehen sich dann die Scheiben nicht mehr und es entstehen Verstopfer und Beschädigungen. Ein einwandfreies Ausbringen des Saatgutes ist nicht mehr möglich. Ein häufiges bzw. regelmäßiges Nachstellen der Abstreifer verhindert dieses Problem zwar vom Grunde her, ist aber sehr zeitaufwendig und auch unwirtschaftlich. Daher ist bereits versucht worden, die Abstreifer mittels Federn an die Scheiben der Doppelscheibensäschare anzudrücken. Ein solches Konzept ist aber aufwendig, da mehrere Bauteile notwendig sind und weil die Federkraft nur gering sein darf, um ein Abbremsen der Scheiben durch den Abstreifer zu verhindern. Eine genaue Einstellung ist daher eigentlich notwendig, aber kaum möglich. Nachteilig ist darüber hinaus, dass die für die Feineinstellung notwendigen Federn teuer sind und aus rostfreiem Material bestehen müssen, um nicht der Korrosion zu unterliegen. Damit verbleibt auch einer derartigen Ausbildung ein nicht unerhebliches Risiko bezüglich des einwandfreien Funktionierens der Doppelscheibensäschare.

Aus der EP-A-0056988 ist eine Säschiene gemäß dem Oberbegriff von Anspruch 1 bekannt.

Der Erfindung liegt daher die Aufgabe zugrunde, Abstreifer für Scheibensäschare in verbesserter Ausführung zu schaffen, die praktisch wartungsfrei sind und nicht nachgestellt zu werden brauchen.

Die Aufgabe wird gemäß der Erfindung dadurch gelöst, dass der Abstreifer als elastische, U-förmig eingespannte, nicht metallische Platte ausgeführt ist.

Durch diese besondere Ausführung und Anordnung des Abstreifers wird anhaftendes Erdreich einfach und sicher entfernt. Durch die elastische Ausbildung der Abstreifer liegen sie immer an den Scheiben dicht an und lassen ein Anhaften und Aufbauen von Erdreich erst gar nicht zu. Durch die elastische Ausbildung stellen sich die Abstreifer praktisch selbsttätig nach.

Ein sicherer Abstreifer ist sichergestellt, wenn die Schenkel der U-förmig eingespannten Platte gegen die Drehrichtung der Scheiben gerichtet angeordnet sind. Die quasi auf "Griff" stehenden Schenkel scheren das anhaftende Erdreich ab und sind so lange funktionstüchtig, so lange der Abstreifer an den Scheiben anliegt.

Die gewünschte Funktionsweise wird insbesondere dann erfüllt, wenn die elastische Platte selbstfedernd ausgebildet ist und vorzugsweise aus Kunststoff, Gummi oder Gewebe besteht. Durch die selbstfedernde Ausbildung stellt sich der Abstreifer bis zum Stadium des vollständigen Verschleisses immer selbstständig nach. Der U-förmig eingespannt eingestellte Abstreifer federt bis zur Strecklage ein und ist erst dann funktionsuntüchtig. Eine Verletzung bzw. Beschädigung der Scheiben kann so nicht auftreten.

Die elastische Platte ist lösbar mit dem Halter des Scheibensäschars verbunden und drehbar oder wendbar ausgebildet. Dadurch ist die Möglichkeit gegeben, den Abstreifer zu drehen und praktisch die Standzeit zu verdoppeln ohne dass seine Funktion davon beeinträchtigt würde. Wesentlich verbesserte Standzeiten des jeweiligen Abstreifers sind die Folge.

Die elastische, gerade oder vergeformte Platte kann einfach und sicher in die U-förmige Anordnung gebracht werden, da die elastische Platte gemäß einer weiteren Ausbildung der Erfindung breiter, vorzugsweise doppelt so breit wie der Abstand der Scheiben zueinander ist. Mit dem Montieren der elastischen Platte wird sie dann gleichzeitig in diese Position gebracht, die ihr die Möglichkeit gibt, entsprechend säubernd auf die Innenflächen der Scheiben einzuwirken. Die elastische Platte drückt dabei mit ihren jeweiligen Kanten gegen die Innflächen der Scheiben und schabt dabei den eventuell anhaftenden Boden sicher ab. Zweckmäßig handelt es sich dabei um ein vorgeformtes Abstreiferteil.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Doppelscheibensäschar mit Abstreifer,
- Fig. 2: einen Ausschnitt eines Doppelscheibensäschares mit Abstreifer von oben und
- Fig. 3: eine Draufsicht auf einen nicht vorgeformten, drehbaren Abstreifer in Form einer elastischen, hier noch nicht eingesetzten Platte,
- Fig. 4: eine Draufsicht auf einen nicht vorgeformten, wendbaren Abstreifer,

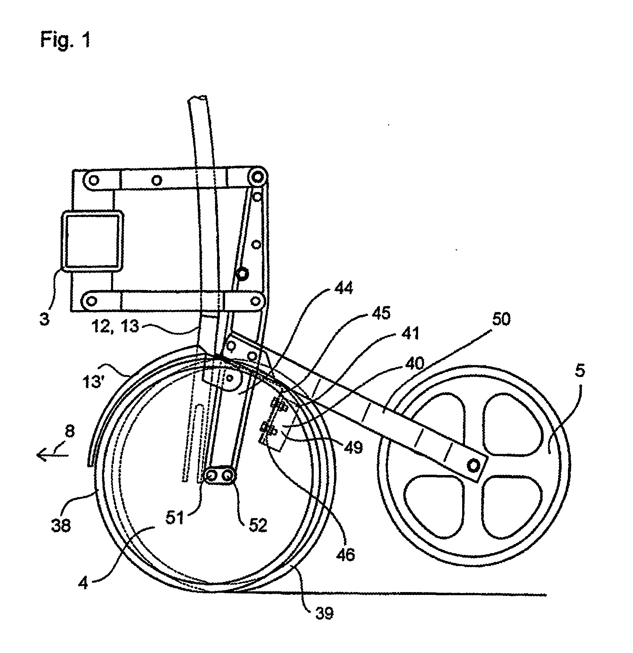

Fig. 1 gibt eine Einheit aus Scheibensäschar 4 mit zusätzlicher Druckrolle 5 wieder, wobei das Scheibensäschar 4 als Doppelscheibensäschar ausgebildet ist. Die Druckrolle 5 ist über eine Stange 50 am Träger 44 festgelegt. Das Rohrstück 13 dient zum Anschlag der Schläuche oder Rohrleitungen, über die das Saatgut zum Scheibensäschar 4 gefördert wird. Die Abdeckung 13' verhindert, dass Erdreich zwischen die Scheiben gelangen kann.

Das Doppelscheibensäschar 4 besteht aus zwei Scheiben 38, 39, wobei ein Abstreifer 40 so zwischen beiden Scheiben 38, 39 positioniert ist, dass er die Innenflächen der beiden Scheiben 38, 39 gleichmäßig von anhaftendem Erdboden säubert.

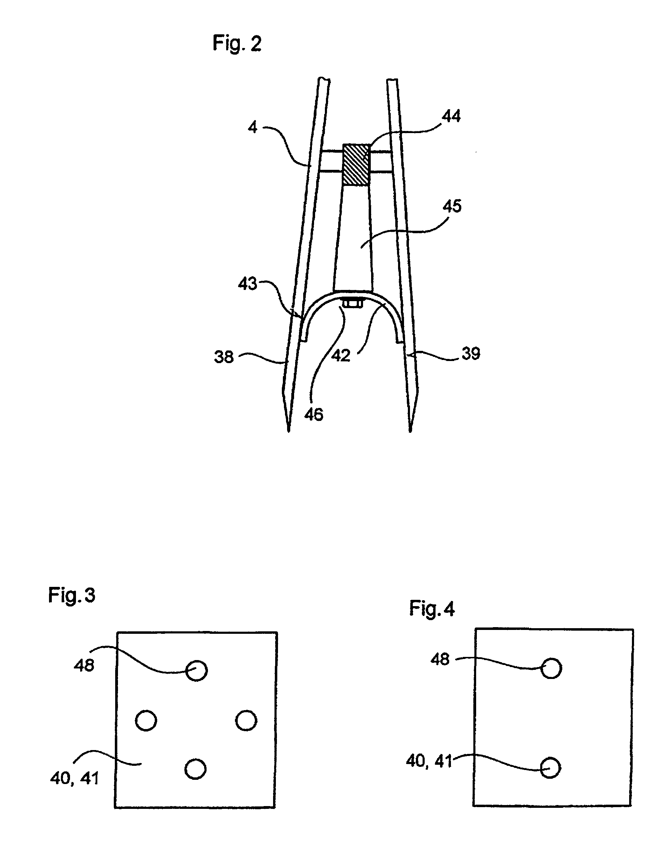

Der Abstreifer 40 besteht aus einer elastischen Platte 41, die U-förmig in den Spalt zwischen beide Scheiben 38, 39 hineingezogen ist. Entsprechendes verdeutlicht Fig. 2, wo eine entsprechend eingespannte elastische Platte 41 wiedergegeben ist. Durch diese "Verformung" werden die Schenkel 42, 43 der elastischen Platte 41 so vorgespannt, dass sie genau auf die Innenflächen der Scheiben 38, 39 einwirken. Die elastische Platte 41 besteht aus Kunststoff, Gummi, Gewebe oder einem ähnlich wirkenden, selbstfedernd ausgebildeten Material. Das Material ist gerade oder etwas vorgeformt und bewirkt die anstellende Wirkung aufgrund der elastischen Ausbildung.

Die elastische Platte 41 ist über einen Halter 45 mit dem Träger 44 verbunden und wird über Halteschrauben 46 gehalten.

Fig. 2 lässt erkennen, dass die Schenkel 42, 43 auch bei bereits eingetretenem Verschleiss immer noch für ein gleichmäßiges Säubern der Innenseiten der Scheiben 38, 39 sorgen. Sie sind aufgrund der elastischen Ausbildung selbstnachstellend ausgebildet. Die L-förmige Ausbildung wird gewährleistet, indem die breite Platte 41 zwischen die Scheiben 38, 39 eingezogen und belastet wird.

Fig. 3 und Fig. 4 zeigen die elastische Platte 41 bzw. den Abstreifer 40 vor dem Einbau. Er kann mit vier oder auch zwei Bohrungen 48 versehen sein.

Die beiden Scheiben 38, 39 sind auch in Fahrtrichtung 8 versetzt zueinander angeordnet. Dies zeigt insbesondere Fig. 1. Die Drehachsen 51, 52 am unteren Ende des Trägers 44 verdeutlichen dies.

## Patentansprüche

1. Drillmaschine (1) bzw. Säschiene (3) mit Scheibensäscharen (4) denen Abstreifer (40) zugeordnet sind, wobei
die Scheibensäschare (4) als V-förmig zueinander stehende Doppelscheibensäschare ausgebildet sind und der Abstreifer (40) zwischen den V-förmig stehenden Scheiben (38, 39) im in Arbeits- bzw. Fahrtrichtung (8) hinteren Bereich zwischen den Scheiben (38, 39) angeordnet ist **dadurch gekennzeichnet, daß** der Abstreifer als elastische, U-förmig eingespannte, nicht metallische Platte (41) ausgeführt ist.

2. Drillmaschine nach Anspruch 1,
**dadurch gekennzeichnet,**
**dass** die Schenkel (42, 43) der U-förmig eingespannten Platte (41) gegen die Drehrichtung der Scheiben (38, 39) gerichtet angeordnet sind.

3. Drillmaschine nach einem der vorhergehenden Ansprüche,
**dadurch gekennzeichnet,**
**dass** die elastische Platte (41) selbstfedernd ausgebildet ist und vorzugsweise aus Kunststoff, Gummi oder Gewebe besteht.

4. Drillmaschine nach einem der vorhergehenden Ansprüche,
**dadurch gekennzeichnet,**
**dass** die elastische Platte (41) lösbar mit dem Halter (45) des Scheibensäschars (4) verbunden und drehbar oder wendbar ausgebildet ist.

5. Drillmaschine nach einem der vorhergehenden Ansprüche,
**dadurch gekennzeichnet,**
**dass** die elastische Platte (41) breiter, vorzugsweise doppelt so breit wie der Abstand der Scheiben (38, 39) zueinander ist.

6. Drillmaschine nach einem der vorhergehenden Ansprüche,
**dadurch gekennzeichnet,**
**dass** die elastische Platte (41) als vorgeformtes Abstreiferteil ausgebildet ist.

## Claims

1. Seed drill (1) or seed rail (3) with disc sowing shares (4) with which scrapers (40) are associated, the disc sowing shares (4) being designed as double disc sowing shares arranged in the shape of a V and the scraper (40) being disposed between discs (38, 39) arranged in the shape of a V in the region between the discs (38, 39) trailing in the working direction or direction of travel (8), **characterised in that** the scraper is designed as an elastic, non-metallic plate (41) fixed in the shape of a U.

2. Seed drill according to claim 1, **characterised in that** the legs (42, 43) of the plate (41) fixed in the shape of a U are directed against the rotational direction of the discs (38, 39).

3. Seed drill according to any of the preceding claims, **characterised in that** the elastic plate (41) is designed so as to be inherently resilient and preferably consists of plastics material, rubber or fabric.

4. Seed drill according to any of the preceding claims, **characterised in that** the elastic plate (41) is detachably connected to the holder (45) of the disc sowing share (4) and is designed so as to be rotatable or turnable.

5. Seed drill according to any of the preceding claims, **characterised in that** the elastic plate (41) is wider than, preferably twice as wide as, the distance between the discs (38, 39).

6. Seed drill according to any of the preceding claims, **characterised in that** the elastic plate (41) is designed as a preformed scraper component.

## Revendications

1. Machine à semer (1) ou semoir (3) comportant des assemblages à semer (4) en forme de disque auxquels sont associés des racloirs (40), dans laquelle les assemblages à semer (4) en forme de disque sont formés comme des assemblages à semer (4) doubles en forme de disque verticaux qui forment un V l'un avec l'autre et le racloir (40) est agencé entre les disques (38, 39) verticaux formant un V dans la zone arrière entre les disques (38, 39) dans le sens de la marche ou le sens de travail (8), **caractérisée en ce que** le racloir est construit en plaque (41) élastique non métallique, encastrée en forme de U.

2. Machine à semer selon la revendication 1, **caractérisée en ce que** les montants (42, 43) de la plaque (41) encastrée en forme de U sont agencés de manière à être dirigés dans le sens contraire du sens de rotation des disques (38, 39).

3. Machine à semer selon l'une quelconque des revendications précédentes, **caractérisée en ce que** la plaque (41) élastique est montée de manière à être intrinsèquement élastique et est composée de préférence de matière plastique, de caoutchouc ou de tissu.

4. Machine à semer selon l'une quelconque des revendications précédentes, **caractérisée en ce que** la plaque (41) élastique est reliée de manière démontable au support (45) de l'assemblage à semer (4) en forme de disque et est montée de manière rotative ou de manière à pouvoir pivoter.

5. Machine à semer selon l'une quelconque des revendications précédentes, **caractérisée en ce que** la plaque (41) élastique est plus large, de préférence deux fois plus large que la distance des disques (38, 39) l'un par rapport à l'autre.

6. Machine à semer selon l'une quelconque des revendications précédentes, **caractérisée en ce que** la plaque (41) élastique est montée comme pièce préformée du racloir.
